Europäisches Patentamt

European Patent Office

Office européen des brevets

(19)

(11) Numéro de publication : **0 198 749**
**B1**

# (12) FASCICULE DE BREVET EUROPÉEN

(45) Date de publication du fascicule du brevet :
25.05.88

(51) Int. Cl.⁴ : **A 47 J 31/40**

(21) Numéro de dépôt : 86400647.3

(22) Date de dépôt : 26.03.86

(54) Appareil ménager utilisant une poudre hydrophile.

(30) Priorité : 03.04.85 FR 8505084

(43) Date de publication de la demande :
22.10.86 Bulletin 86/43

(45) Mention de la délivrance du brevet :
25.05.88 Bulletin 88/21

(84) Etats contractants désignés :
CH DE GB LI

(56) Documents cités :
DE-A- 1 952 061
DE-A- 2 734 992
DE-B- 1 212 045
FR-A- 658 046
FR-A- 2 298 997
FR-A- 2 323 361
US-A- 2 812 879
US-A- 3 446 399

(73) Titulaire : SEB S.A.
F-21260 Selongey (FR)

(72) Inventeur : Daloz, Joanny
4 rue Général Charbonel
F-21120 Is Sur Tille (FR)

(74) Mandataire : Bouju, André
Cabinet Bouju 38 avenue de la Grande Armée
F-75017 Paris (FR)

Jouve, 18, rue St-Denis, 75001 Paris, France

EP 0 198 749 B1

## Description

La présente invention concerne un appareil ménager utilisant une poudre hydrophile, comprenant une chambre de dosage de cette poudre et des moyens pour transférer cette poudre vers un récipient.

L'invention vise plus particulièrement un appareil ménager pour préparer des boissons chaudes ou froides à base de poudre soluble telle que café, chocolat lait en poudre, etc.

On connaît des appareils destinés, non pas à un usage ménager, mais à un usage public et qui sont généralement fixes, qui permettent de préparer des boissons, moyennant l'introduction de pièces de monnaie dans ces appareils. De tels appareils sont décrits par exemple dans les brevets français 2 323 361 et 2 365 995.

Dans ces appareils, le transfert de la poudre depuis une réserve de poudre vers une chambre de dosage de celle-ci, s'effectue par gravité. De même, le transfert de la poudre depuis la chambre de dosage vers une chambre pour mélanger cette poudre avec de l'eau, du lait ou autre liquide, est réalisé par gravité.

Ces transferts de poudre par gravité impliquent que les diverses chambres soient disposées les unes au-dessus des autres, ce qui entraîne un encombrement en hauteur important, et rend ces appareils peu compatibles avec un usage domestique.

Par ailleurs, dans ce type d'appareil utilisant une poudre soluble ou au moins hydrophile, la vapeur du liquide qui est formée lors du chauffage de celui-ci tend à remonter vers la chambre de dosage de la poudre et vers la réserve de poudre, ce qui occasionne une agglomération de celle-ci et perturbe gravement le fonctionnement de l'appareil.

Pour remédier à cette difficulté, on est obligé d'utiliser des moyens complexes et coûteux pour réaliser l'étanchéité entre les différents compartiments de l'appareil une fois que le transfert de la poudre a été effectué. La construction de ces appareils est par conséquent très coûteuse, ce qui les rend définitivement incompatibles à l'usage domestique.

On connaît selon le US-A-2 812 879 un appareil à usage public utilisant une poudre hydrophile telle que café, cacao, sucre, etc. comprenant une chambre de dosage de cette poudre et des moyens pour transférer cette poudre vers un récipient de mélange selon lesquels on forme un courant d'air momentané ayant un débit et une pression suffisants pour propulser la poudre de la chambre de dosage vers le récipient dans lequel cette poudre est mélangée avec un liquide tel que de l'eau chaude.

Dans cet appareil, la vapeur de l'eau chaude risque en pénétrant dans les conduits d'acheminement de la poudre hydrophile vers le récipient de mélange, d'agglomérer cette poudre et ainsi de boucher les conduits précités.

Par ailleurs, la structure complexe de cet appareil n'est pas compatible avec celle d'un appareil à usage ménager.

Le but de la présente invention est de créer un appareil ménager utilisant une poudre hydrophile qui soit peu encombrant et de construction simple, tout en évitant tout risque d'agglomération de la poudre hydrophile par de la vapeur formée dans cet appareil.

Suivant l'invention, l'appareil ménager utilisant une poudre hydrophile, comprenant une chambre de dosage de cette poudre et des moyens pour transférer cette poudre vers un récipient de mélange dans lequel cette poudre est mélangée avec un liquide, ces moyens comprenant des moyens pour former un courant d'air momentané ayant un débit et une pression suffisants pour propulser la poudre de la chambre de dosage vers le récipient de mélange est caractérisé en ce qu'il comprend une turbine entraînée par un moteur pour créer un courant d'air entre la base de la chambre de dosage et une ouverture qui débouche dans un canal reliant cette chambre de dosage et le récipient de mélange, la base de la chambre de dosage comportant des moyens pour empêcher le passage de la poudre tout en étant perméable au courant d'air et en ce que le canal précité débouche dans la chambre de mélange par un clapet perméable au courant d'air et à la poudre provenant de la chambre de dosage, mais imperméable dans le sens inverse.

Le courant d'air engendré par la turbine souffle la poudre contenue dans la chambre de dosage vers la chambre de mélange. Ce courant d'air maintient la poudre à l'état pulvérulent en évitant tout risque d'agglomération de celle-ci ou d'adhérence de cette poudre aux parois de la chambre de dosage et du canal qui relie celle-ci à la chambre de mélange. Ce risque est éliminé du fait que le clapet par lequel le canal débouche dans la chambre de mélange interdit toute pénétration de liquide dans ce canal.

Des modes de réalisation particuliers font l'objet des revendications dépendantes.

D'autres particularités et avantages de l'invention apparaîtront encore dans la description ci-après.

Aux dessins annexés, donnés à titre d'exemples non limitatifs :

la figure 1 est une vue schématique et en perspective avec arrachements d'un appareil conforme à l'invention,

la figure 2 est une vue en coupe longitudinale du piston de l'appareil,

la figure 3 est une vue en coupe suivant le plan III-III de la figure 2,

la figure 4 est une vue en coupe suivant le plan IV-IV de la figure 1,

la figure 5 est une vue en coupe longitudinale d'un appareil conforme à l'invention pour préparer du café à partir d'une poudre de café soluble,

la figure 6 est une vue en coupe suivant la ligne brisée VI-VI de la figure 5,

la figure 7 est le schéma du circuit électrique de commande des différents organes électriques de l'appareil.

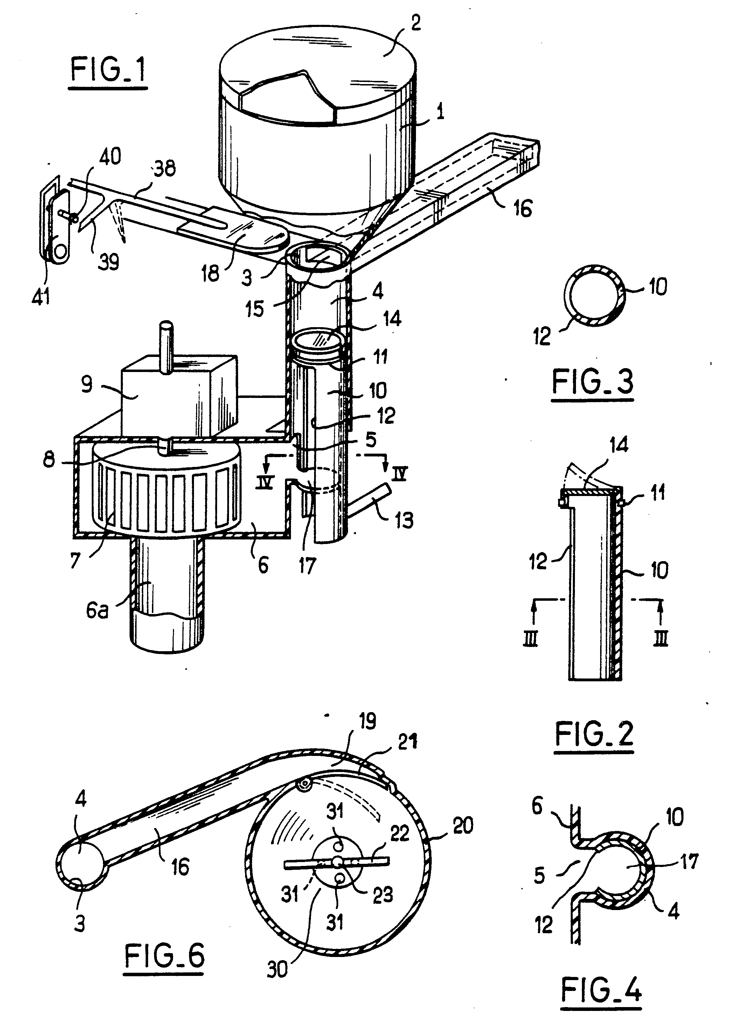

Dans la réalisation de la figure 1, l'appareil conforme à l'invention destiné à préparer une boisson chaude, à partir d'une poudre soluble telle que du café, comprend une trémie 1 renfermant la poudre soluble et fermée par un couvercle 2, cette trémie présentant à sa partie inférieure une ouverture 3 qui débouche dans une chambre de dosage 4 cylindrique dont l'axe est vertical.

La partie inférieure du cylindre constituant la chambre de dosage 4 présente une ouverture latérale 5 qui communique avec un compartiment 6 dans lequel est montée en rotation une turbine 7 dont l'axe vertical 8 est entraîné par un moteur électrique 9. Cette turbine 7 aspire l'air extérieur par le conduit 6a.

Dans la chambre de dosage cylindrique 4 est monté de façon coulissante un piston 10 dont la tête porte un joint d'étanchéité annulaire 11. Ce piston 10 comporte un évidement latéral 12 qui s'étend suivant pratiquement toute sa hauteur, ce qui permet à l'ouverture 5 de communiquer avec l'intérieur du piston 10 dans toutes les positions de celui-ci à l'intérieur de la chambre de dosage 4. Le déplacement du piston 10 est commandé par un levier 13 accessible à l'utilisateur, ce qui permet à ce dernier de régler le volume intérieur de la chambre de dosage 4.

La tête du piston 10 forme la base de la chambre de dosage 4 dont la position détermine le volume de la poudre qui est introduite dans cette chambre. La tête du piston 10 porte un clapet 14, constitué par un disque en matière élastique reposant élastiquement sur une ouverture ménagée dans cette tête et fixée à cette dernière par une articulation souple, ce qui permet au clapet 14 de se soulever sous l'effet d'une pression exercée à l'intérieur du piston (voir figure 2). Ce clapet 14 empêche le passage de la poudre vers l'intérieur du piston 10, tout en permettant le passage du courant d'air qui est soufflé par la turbine 7 à l'intérieur du piston 10.

Juste en-dessous de l'ouverture 3 par laquelle la trémie 1 communique avec l'intérieur de la chambre de dosage 4 est ménagée une ouverture latérale 15 qui communique avec un canal sensiblement horizontal 16. Ce canal 16 débouche dans une chambre de mélange qui sera décrite plus loin.

L'ouverture 3 est obturable au moyen d'un registre coulissant 18 pouvant être actionné par l'utilisateur.

Par ailleurs, comme indiqué sur les figures 1 et 4, la partie inférieure du piston creux 10 est rendue étanche par rapport à l'ouverture 5 d'entrée de l'air, au moyen d'un disque 17 qui épouse le contour intérieur du piston 10. Ce disque 17 est fixé au compartiment 6 renfermant la turbine 7, sous l'ouverture 5 d'entrée de l'air.

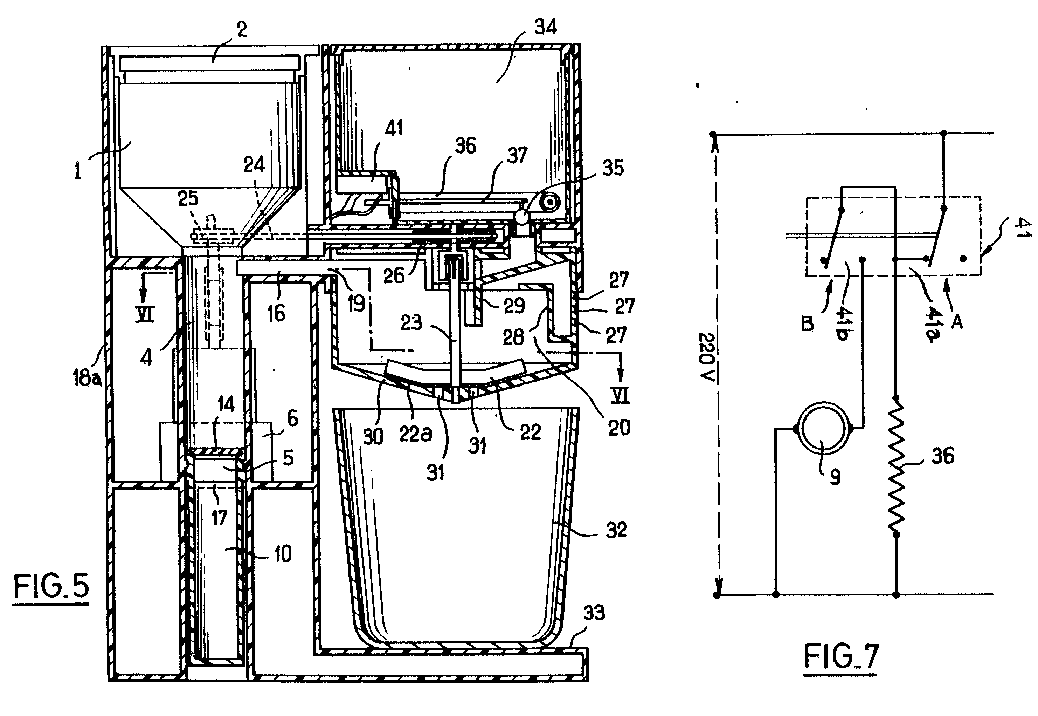

Dans la réalisation de la figure 5, l'ensemble représenté sur la figure 1 est monté à l'intérieur d'un boîtier extérieur 18a.

On voit sur cette figure 5, que le canal horizontal 16 relié à la partie supérieure de la chambre de dosage 4 débouche par une ouverture 19 dans une chambre de mélange 20 qui est par conséquent placée à côté de la chambre de dosage 4.

L'ouverture 19 est fermée par un clapet 21 (voir figure 6) qui est perméable au courant d'air et à la poudre propulsée par ce dernier depuis la chambre de dosage 4. Ce clapet 21 est toutefois imperméable dans le sens inverse.

La chambre de mélange 20 comprend une pale 22 montée en rotation sur un axe vertical 23. Cette pale 22 est entraînée en rotation par le moteur 9 qui entraîne la turbine 7 au moyen d'un accouplement par courroie 24 enroulée sur des poulies 25, 26.

La chambre de mélange 20 comprend sur sa paroi latérale, à l'opposé du clapet 21, de petites ouvertures 27 pour l'évacuation de l'air. En regard de celles-ci, sont prévues deux chicanes 28, 29, conformées pour éviter que la poudre et le liquide qui sont introduits dans la chambre 20 soient chassés par ces ouvertures 27.

Le fond 30 de la chambre de mélange 20 est conique et présente autour de l'axe 23 de la pale 22 une série de trous 31 permettant la sortie de la boisson préparée dans la chambre 20. Sous ces trous 31 est placé un réceptacle 32 de collecte de la boisson, qui est posé sur un socle 33 qui fait partie du boîtier 18a. On voit également sur la figure 5, que le bord inférieur 22a de la pale rotative 22 affleure le fond conique 30 de la chambre 20. Cette pale 22, en tournant, crée à l'intérieur de la chambre 20 une dépression qui empêche la boisson de s'écouler par les trous 31.

Au-dessus de la chambre de mélange 20 et à côté de la trémie 1 est placé un réservoir à liquide 34 dont le fond communique avec l'intérieur de la chambre 20 par une soupape 35. Près de ce fond, s'étend une résistance chauffante 36.

L'ouverture de la soupape 35 est commandée par un élément bi-métallique 37 ou analogue qui est réglé de façon que la soupape 35 s'ouvre lorsque la température du liquide contenu dans le réservoir 34 atteint la valeur désirée qui est par exemple égale à 85-90 °C dans le cas du café.

On voit d'autre part sur la figure 1 que le registre 18 qui commande l'ouverture et la fermeture de l'ouverture 3 est solidaire d'une tige 38 pouvant être actionnée manuellement par l'utilisateur. Cette tige 38 comporte une butée 39 qui peut prendre appui sur le bouton de commande 40 d'un limiteur de température 41, ce qui a pour effet de réarmer celui-ci lorsque l'utilisateur met le registre 18 en position d'ouverture. Ce limiteur de température 41 est placé en contact avec le réservoir chauffant 34 (voir figure 5).

Le limiteur de température 41 comprend deux circuits électriques A et B (voir figure 7) réagissant à des températures différentes.

Lorsqu'on arme le limiteur de température 41 à froid, l'armature mobile 41a qui est associée à la résistance de chauffage 36 ferme le circuit A, de sorte que la résistance 36 est mise sous tension.

L'armature mobile 41b qui est associée au moteur électrique 9 est par contre en position d'ouverture, de sorte que ce moteur n'est pas alimenté en courant.

Lorsque la température du liquide contenu dans le réservoir chauffant 34 atteint la valeur désirée, par exemple égale à 85 °C dans le cas du café, l'armature mobile 41b du circuit électrique B se met en position de fermeture, en commandant ainsi l'alimentation électrique du moteur 9.

La résistance électrique 36 continue à chauffer jusqu'à ce que la température du liquide atteigne une température égale par exemple à 95 °C. A ce moment, l'armature mobile 41a du circuit A bascule et coupe l'alimentation électrique de la résistance chauffante 36 et du moteur 9.

Le fonctionnement de l'appareil ménager que l'on vient de décrire est le suivant :

On remplit la trémie 1 par du café soluble en poudre et on verse dans le réservoir chauffant 34 une quantité d'eau correspondant au nombre de tasses désirées.

On règle le piston doseur 10 de façon que le volume de la chambre de dosage 4 corresponde au volume de café nécessaire pour le nombre de tasses précité.

Le registre 18 est ouvert puis refermé en provoquant dans sa position d'ouverture, l'armement du limiteur 41. La résistance 36 commence à chauffer l'eau contenue dans le réservoir 34 et la poudre de café remplit complètement la chambre de dosage 4, c'est-à-dire le volume de la chambre 4 compris entre le registre 18 et le clapet 14.

Lorsque l'eau atteint 85 °C, le moteur 9 se met en route provoquant d'une part la rotation de la pale mélangeuse 22 et créant d'autre part par rotation de la turbine 7 un courant d'air qui pénètre à l'intérieur du piston et soulève le clapet 14 de ce dernier. Ce courant d'air entraîne la poudre de café contenue dans la chambre de dosage 4 vers le canal 16 et la chambre de mélange 20 en repoussant au passage le clapet 21.

A une température comprise entre 85 et 90 °C, la lame déformable 37 soulève la soupape 35, ce qui provoque le passage de l'eau chaude contenue dans le réservoir 34 dans la chambre de mélange 20.

Compte tenu de la rotation de la pale 22, un effet centrifuge se produit qui aspire l'air par les orifices 31 et empêche ainsi la poudre ou la boisson de s'écouler hors de la chambre de mélange 20.

A une température sensiblement égale à 95 °C, le moteur 9 s'arrête, ainsi que le chauffage de l'eau. La pale 22 étant immobilisée, la boisson peut alors s'écouler dans le récipient 32. A l'arrêt de la ventilation, le clapet 21 se referme ainsi que le clapet 14. Aucune vapeur d'eau ne peut alors remonter vers la trémie 1, vers la chambre de dosage 4 et vers le canal de communication 16, de sorte que tout risque de condensation d'eau susceptible de provoquer l'agglomération de la poudre est évité.

Bien entendu, l'invention n'est pas limitée à l'exemple que l'on vient de décrire, et on peut apporter à celui-ci de nombreuses modifications sans sortir du cadre de l'invention.

Ainsi, l'invention peut s'appliquer à tout appareil ménager utilisant une poudre hydrophile que l'on doit transférer entre une chambre de dosage et un récipient dans lequel il existe un risque de colmatage par de la poudre en présence d'eau condensée ou de vapeur.

**Revendications**

1. Appareil ménager utilisant une poudre hydrophile, comprenant une chambre (4) de dosage de cette poudre et des moyens pour transférer cette poudre vers un récipient de mélange (20) dans lequel cette poudre est mélangée avec un liquide, ces moyens comprenant des moyens (7) pour former un courant d'air momentané ayant un débit et une pression suffisants pour propulser la poudre de la chambre de dosage (4) vers le récipient de mélange (20), caractérisé en ce que l'appareil comprend une turbine (7) entraînée par un moteur (9) pour créer un courant d'air entre la base de là chambre de dosage (4) et une ouverture (15) qui débouche dans un canal (16) reliant cette chambre de dosage et le récipient de mélange (20), la base de la chambre de dosage comportant des moyens (14) pour empêcher le passage de la poudre tout en étant perméable au courant d'air et en ce que le canal (16) débouche dans la chambre de mélange (20) par un clapet (21) perméable au courant d'air et à la poudre provenant de la chambre de dosage (4) mais imperméable dans le sens inverse.

2. Appareil conforme à la revendication 1, la chambre de dosage (4) étant sensiblement cylindrique et présentant un axe sensiblement vertical, un piston (10) étant monté coulissant à l'intérieur de cette chambre pour pouvoir modifier le volume de celle-ci, caractérisé en ce que la tête du piston (10) constitue la base de la chambre de dosage (4) et porte un clapet (14) perméable au passage du courant d'air et imperméable à la poudre.

3. Appareil conforme à la revendication 2, caractérisé en ce que la chambre de dosage (4) comporte à sa partie inférieure une ouverture d'entrée d'air (5) communiquant avec la sortie d'air de la turbine (7).

4. Appareil conforme à l'une des revendications 2 ou 3, caractérisé en ce que le piston (10) monté dans cette chambre est creux et permet le libre passage de l'air de la sortie de la turbine vers la chambre de dosage.

5. Appareil conforme à la revendication 4, caractérisé en ce que le piston comporte un évidement latéral (12) qui communique avec l'ouverture d'entrée d'air (5), des moyens (17) étant prévus pour rendre la partie inférieure du piston (10) étanche par rapport à l'ouverture d'entrée de l'air (5).

6. Appareil conforme à la revendication 5, caractérisé en ce que ces moyens comprennent un disque (17) épousant le contour intérieur du piston (10), ce disque étant fixé au compartiment (6) de la turbine sous l'ouverture d'entrée de l'air (5).

7. Appareil conforme à l'une des revendications 1 à 6, la chambre de mélange (20) comprenant une ouverture latérale (27) d'évacuation de l'air, caractérisé en ce que l'ouverture (27) est placée à l'opposé du clapet (21), une ou plusieurs chicanes (28, 29) étant prévues en regard de cette ouverture (27) pour empêcher le passage de la poudre et du liquide qui sont introduits dans cette chambre.

8. Appareil conforme à la revendication 7, caractérisé en ce que le fond (30) de la chambre de mélange (20) comprend au moins un trou (31) de sortie du mélange liquide-poudre et en ce qu'une pale rotative (22) montée en rotation dans cette chambre, comporte un bord inférieur (22a) qui affleure le fond (30) de la chambre.

9. Appareil conforme à l'une des revendications 1 à 8, une trémie (1) d'alimentation en poudre de la chambre de dosage (4) étant disposée au-dessus de cette dernière et débouche dans cette chambre par une ouverture (3) obturable par un organe d'obturation (18) accessible à l'utilisateur, cette ouverture (3) étant placée juste au-dessus de l'ouverture (15) qui communique avec le canal (16) de transfert de la poudre, caractérisé en ce que l'organe d'obturation (18) de la communication entre la trémie (1) et la chambre de dosage (4) comporte des moyens (39) qui, lorsqu'on ouvre l'organe d'obturation sont adaptés pour actionner un limiteur de température (41) qui commande la mise en route du chauffage de la résistance (36), des moyens étant prévus en outre pour commander la mise en route du moteur d'entraînement de la turbine (7) et de la pale rotative (22) lorsque la température du liquide contenu dans le réservoir (34) atteint une valeur prédéterminée.

## Claims

1. A domestic appliance using a hydrophilic powder, comprising a powder dispensing chamber (4) and means for transferring said powder to a mixing container (20) in which said powder is mixed with a liquid, said means comprising means (7) to form an instantaneous current of air having a rate of flow and pressure sufficient to propel the powder from the dispensing chamber (4) to the mixing container (20), characterised in that the appliance comprises a turbine (7) driven by a motor (9) to create a current of air between the base of the dispensing chamber (4) and an aperture (15) leading into a duct (16) connecting said dispensing chamber and the mixing container (20), the base of said chamber comprising means (14) to prevent the passage of powder while being permeable to the current of air, and in that the duct (16) leads into the mixing chamber (20) via a valve (21) permeable to the current of air and to the powder originating from the dispensing chamber (4) but impermeable in the opposite direction.

2. An appliance according to claim 1, the dispensing chamber (4) being substantially cylindrical and having a substantially vertical axis, a piston (10) being mounted slidably inside said chamber to be able to modify the volume thereof, characterised in that the head of the piston (10) forms the base of the dispensing chamber (4) and bears a valve (14) permeable to the passage of the current air and impermeable to the powder.

3. An appliance according to claim 2, characterised in that the dispensing chamber (4) has at its bottom part an air inlet aperture (5) communicating with the air outlet of the turbine (7).

4. An appliance according to claim 2 or 3, characterised in that the piston (10) mounted in said chamber is hollow and allows free passage of the air from the turbine outlet to the dispensing chamber.

5. An appliance according to claim 4, characterised in that the piston has a lateral recess (12) communicating with the air inlet aperture (5), means (17) being provided to seal off the bottom part of the piston (10) with respect to the air inlet aperture (5).

6. An appliance according to claim 5, characterised in that said means comprise a disc (17) matching the inner contour of the piston (10), said disc being fixed to the turbine compartment (6) beneath the air inlet aperture (5).

7. An appliance according to any one of claims 1-6, the mixing chamber (20) comprising a lateral air discharge aperture (27), characterised in that the aperture (27) is disposed remote from the valve (21), one or more baffles (28, 29) being provided facing said aperture (27) to prevent the passage of the powder and liquid introduced into said chamber.

8. An appliance according to claim 7, characterised in that the base (30) of the mixing chamber (20) comprises at least one hole (31) for the discharge of the liquid-powder mixture and in that a rotary blade (22) mounted for rotation in said chamber has a bottom edge (22a) which is flush with the chamber base (30).

9. An appliance according to any of claims 1 to 8, a funnel (1) for supplying powder to the dispensing chamber (4) being disposed above the latter and leading into said chamber via an aperture (3) which can be closed by a closure member (18) accessible to the user, said aperture (3) being disposed just above the aperture (15) which communicates with the powder transfer duct (16), characterised in that the closure member (18) for the communication between the funnel (1) and the dispensing chamber (4) comprises means (39) which, when the closure member is opened, are adapted to actuate a temperature limiter (41) which controls the starting of the heating of the resistance (36), means also being provided to control the starting of the motor driving the turbine (7) and the rotary blade (22) when the temperature of the liquid contained in the reservoir (34) reaches a predetermined value.

## Patentansprüche

1. Haushaltsgerät für die Anwendung eines hydrophilen Pulvers, mit einer Dosierkammer (4) für dieses Pulver und Mitteln zum Überführen dieses Pulvers zu einem Mischbehälter (20), worin dieses Pulver mit einer Flüssigkeit vermischt wird, wobei diese Mittel Einrichtungen (7) aufweisen zur Bildung eines vorübergehenden Luftstromes mit ausreichendem Durchsatz und Druck, um das Pulver von der Dosierkammer (4) zu dem Mischbehälter (20) auszutreiben, dadurch gekennzeichnet, daß das Gerät eine von einem Motor (9) angetriebene Turbine umfaßt, um einen Luftstrom zwischen der Basis der Dosierkammer (4) und einer Öffnung (15) zu bilden, welche in einen Kanal (16) ausmündet, der diese Dosierkammer mit dem Mischbehälter (20) verbindet, wobei die Basis der Dosierkammer Mittel (14) zum Verhindern des Durchgangs des Pulvers umfaßt, aber für den Luftstrom durchlässig ist, und daß der Kanal (16) in die Mischkammer (20) ausmündet durch eine Klappe (21), welche für den Luftstrom und für das aus der Dosierkammer (4) kommende Pulver durchlässig ist, aber in umgekehrter Richtung undurchlässig ist.

2. Gerät nach Anspruch 1, wobei die Dosierkammer (4) im wesentlichen zylindrisch ist und eine im wesentlichen senkrechte Achse aufweist und wobei ein Kolben (10) im Inneren dieser Kammer verschiebbar montiert ist, so daß er das Volumen dieser verändern kann, dadurch gekennzeichnet, daß der Kolbenboden (10) die Basis der Dosierkammer (4) bildet und eine Klappe (14) trägt, die für den Durchgang des Luftstromes durchlässig und für das Pulver undurchlässig ist.

3. Gerät nach Anspruch 2, dadurch gekennzeichnet, daß die Dosierkammer (4) auf ihrem unteren Teil eine Lufteintrittsöffnung (5) aufweist, die mit dem Luftaustritt der Turbine (7) verbunden ist.

4. Gerät nach einem der Ansprüche 2 oder 3, dadurch gekennzeichnet, daß der in dieser Kammer montierte Kolben (10) hohl ist und den freien Durchgang der Luft des Turbinenaustrittes zur Dosierkammer ermöglicht.

5. Gerät nach dem Anspruch 4, dadurch gekennzeichnet, daß der Kolben eine seitliche Aushöhlung (12) aufweist, welche mit der Lufteintrittsöffnung (5) verbunden ist, wobei Mittel (17) vorgesehen sind, um den unteren Kolbenteil (10) gegenüber der Lufteintrittsöffnung (5) dicht zu machen.

6. Gerät nach Anspruch 5, dadurch gekennzeichnet, daß diese Mittel eine sich an den Innenumfang des Kolbens (10) anschmiegende Scheibe (17) umfassen, wobei diese Scheibe an dem Behälter (6) der Turbine unter der Lufteintrittsöffnung (5) befestigt ist.

7. Gerät nach einem der Ansprüche 1 bis 6, wobei die Mischkammer (20) eine seitliche Öffnung (27) für das Ausströmen der Luft umfaßt, dadurch gekennzeichnet, daß die Öffnung (27) gegenüber der Klappe (21) angeordnet ist, wobei eine oder mehrere Schikanen (28, 29) gegenüber dieser Öffnung (27) vorgesehen sind, um den Durchgang des Pulvers und der Flüssigkeit, die in diese Kammer eingegeben werden, zu verhindern.

8. Gerät nach Anspruch 7, dadurch gekennzeichnet, daß der Boden (30) der Mischkammer (20) wenigstens ein Austrittsloch (31) für die Mischung Flüssigkeit-Pulver aufweist und daß eine in dieser Kammer drehbar montierte Drehschaufel (22) einen unteren Rand aufweist, der mit dem Boden (30) der Kammer bündig liegt.

9. Gerät nach einem der Ansprüche 1 bis 8, wobei ein Trichter (1) für die Pulverversorgung der Dosierkammer (4) über dieser angeordnet ist und in diese Kammer über eine Öffnung (3) ausmündet, welche durch ein dem Benutzer zugängliches Verschlußelement (18) verschließbar ist, wobei diese Öffnung (3) genau über der mit dem Überführungskanal (16) des Pulvers verbundenen Öffnung (15) angeordnet ist, dadurch gekennzeichnet, daß das Verschlußelement (18) der Verbindung zwischen dem Trichter (1) und der Dosierkammer (4) Mittel aufweist, welche geeignet sind, wenn das Verschlußelement geöffnet wird, einen Temperaturbegrenzer (41) zu betätigen, welcher die Inbetriebsetzung der Widerstandsheizung (36) steuert, wobei Mittel ferner vorgesehen sind, um die Inbetriebsetzung des Antriebsmotors der Turbine (7) und der Drehschaufel (22) zu steuern, wenn die Temperatur der in dem Vorratsbehälter (34) enthaltenen Flüssigkeit einen vorbestimmten Wert erreicht.

0 198 749

FIG.1

FIG.3

FIG.2

FIG.6

FIG.4

FIG.7

FIG.5

2